# FASCICULE DE BREVET EUROPEEN

(11) **EP 1 989 530 B1**
(45) Date de publication et mention de la délivrance du brevet: **11.10.2017**
(21) Numéro de dépôt: 07731533.1
(22) Date de dépôt: 29.01.2007
(51) Int. Cl.: G01N 17/00, F28F 19/00, F28F 3/08, F28G 15/00

(54) **ECHANGEUR THERMIQUE A PLAQUES INCLUANT UN DISPOSITIF D'EVALUATION DE SON ETAT D'ENCRASSEMENT**
PLATTENWÄRMEAUSTAUSCHER MIT VORRICHTUNG ZUR BEURTEILUNG DES KALKABLAGERUNGSAUSMASSES
PLATE-TYPE HEAT EXCHANGER INCLUDING A DEVICE FOR EVALUATING THE EXTENT TO WHICH IT HAS BECOME COATED IN SCALE

(30) Priorité: 28.02.2006 FR 0650697
(43) Date de publication de la demande: 12.11.2008
(73) Titulaire: Commissariat à l'Énergie Atomique et aux Énergies Alternatives, 75015 Paris (FR); ARMINES, 75272 Paris Cedex 06 (FR)
(72) Inventeur: TOCHON, Patrice, F-38140 Uriage (FR); CLEMENT, Patrice, F-38120 Saint Egrève (FR); LADEVIE, Bruno, F-81150 Marssac sur Tarn (FR)
(74) Mandataire: Cabinet Laurent & Charras
(86) Numéro de dépôt international: PCT/FR2007/050705
(87) Numéro de publication internationale: WO 2007/099240

(56) Documents cités:
- EP-A- 1 398 593
- US-B1- 6 499 876

## Description

### Domaine technique

L'invention se rattache au domaine des échangeurs thermiques, et plus particulièrement des échangeurs à plaques. Elle concerne plus spécifiquement des échangeurs à plaques équipés de dispositifs d'évaluation de l'état d'encrassement des circuits de fluides définis entre les plaques. Elle vise plus particulièrement une conception du dispositif d'évaluation de l'état d'encrassement qui délivre une information fiable, quel que soit le type d'échanges thermiques (liquide/gaz ou liquide/liquide) se produisant dans l'échangeur, et qui en outre puisse être adapté sur divers types d'échangeurs à plaques, et notamment des échangeurs préexistants.

### Techniques antérieures

De façon générale, le problème de l'encrassement des échangeurs thermiques revêt une importance majeure, dans la mesure où il a des conséquences importantes sur la conception et l'exploitation des installations incluant ce type d'échangeurs thermiques. Cet encrassement provient du dépôt des matériaux solides circulant à travers l'échangeur, et qui se déposent dans des zones où la vitesse du fluide est moindre.

Ainsi, dans les industries chimiques, pétrochimiques, ainsi que de production d'énergie par voies thermique ou nucléaire, l'encrassement des échangeurs thermiques a une influence directe sur les performances, et donc les rendements de production. Par ailleurs, les encrassements observés sur certains types d'installations augmentent les risques potentiels de surchauffe dans certaines conditions, avec obligation de réduire la production pour conserver des marges de sécurité suffisantes.

Par ailleurs, pour les industries agro-alimentaires notamment, l'encrassement des échangeurs thermiques est également crucial, dans la mesure où les conséquences peuvent être évaluées sur le plan sanitaire. Ainsi, les échangeurs thermiques doivent faire l'objet fréquent d'interventions de nettoyage, dont le coût se mesure en temps d'arrêt de l'outil de production, et en consommation de produits détergents.

Des études économiques ont montré que le coût global des phénomènes d'encrassement est particulièrement élevé, et qu'il interdit l'accès des échangeurs à plaques à certains marchés pour lesquels les phénomènes d'encrassement doivent être bien maîtrisés.

Des tentatives d'amélioration ont déjà été proposées pour réduire l'encrassement des échangeurs à plaques, qui consistent à concevoir la géométrie des zones d'échanges thermiques de manière spécifique. Toutefois, à ce jour, les phénomènes physiques engendrant l'encrassement ne sont pas totalement compris, de sorte qu'aucune solution réellement satisfaisante n'a été proposée pour maîtriser cet encrassement. Par conséquent, au niveau industriel, l'encrassement des échangeurs thermiques est géré de manière empirique, et des cycles de nettoyage sont programmés en fonction d'un certain retour d'expérience. On conçoit qu'une telle technique n'est pas réellement adaptée à l'emploi d'échangeurs avec des fluides de compositions variables. En outre, lorsque l'intervention de nettoyage est décidée trop tardivement, il se peut que l'encrassement soit tel qu'il nécessite une opération poussée et délicate. En conséquence, les interventions de nettoyage sont souvent programmées de manière plus fréquente que nécessaire, ce qui pénalise le temps de production d'une installation.

Un besoin se fait donc sentir pour une mesure, ou tout au moins une évaluation de l'état d'encrassement qui se fasse en temps réel.

A ce jour, des dispositifs d'évaluation de l'encrassement des échangeurs ont déjà été mis en place sur des échangeurs tubulaires du type gaz/liquide. De telles solutions, telles que notamment décrites dans le document US 6 386 272, sont basées sur le principe de fluxmètres, c'est-à-dire sur une mesure de différences de températures de part et d'autre d'une paroi. Malheureusement, ce principe qui fonctionne pour les échangeurs tubulaires gaz/liquide n'est pas transposable aux échangeurs à plaques. En effet, les mesures de températures selon le principe du fluxmètre nécessitent d'avoir une paroi épaisse entre les deux points de mesure de la température, ce qui est quasiment incompatible avec les épaisseurs de plaques des échangeurs couramment utilisés, de l'ordre de 0,5 mm environ. En outre, le principe de fluxmètre présente une sensibilité réduite dans le cadre d'échanges liquide/liquide, qui est le cas le plus courant des échangeurs à plaques. Le document US 6,499,876 décrit un dispositif d'évaluation de l'encrassement d'un échangeur thermique à plaques. Un objectif de l'invention est donc de fournir un échangeur à plaques qui présente un dispositif d'évaluation de son état d'encrassement qui fonctionne quel que soit le type d'échanges, gaz/liquide, gaz/gaz ou liquide/liquide, opéré par l'échangeur.

Un autre objectif de l'invention est de fournir une solution qui soit adaptable simplement à tout type d'échangeurs à plaques, qu'ils soient de conception nouvelle, ou bien encore en vue d'équiper des échangeurs préexistants.

### Exposé de l'invention

L'invention concerne donc un échangeur thermique à plaques qui comporte, de façon connue, une pluralité de plaques empilées, définissant entre-elles différents circuits de fluides participant à l'échange thermique. De façon connue, cet échangeur inclut un dispositif d'évaluation de son état d'encrassement.

Conformément à l'invention, le dispositif d'évaluation de l'état d'encrassement comporte une résistance électrique, qui est thermiquement reliée à la plaque située à l'extrémité de l'empilement. Le dispositif d'évaluation comporte également des moyens de mesure de la température au voisinage direct de ladite résistance électrique.

Autrement dit, l'invention consiste à mettre en place à l'intérieur de l'échangeur, sur une zone périphérique, une résistance électrique qui permet d'amplifier le flux de chaleur naturellement véhiculé au sein de l'échangeur, par dissipation d'une quantité de chaleur déterminée à un moment voulu. Ainsi, l'évolution temporelle de la température à proximité de la résistance, en fonction de la quantité de chaleur que cette dernière dégage, est fonction directe de l'état d'encrassement de la plaque au contact de laquelle se trouve la résistance. En effet, l'état d'encrassement du circuit de fluide modifie la chaleur spécifique de la plaque, et donc sa capacité à voir sa température s'élever plus ou moins vite. L'avantage d'une telle solution est multiple, puisque l'élévation de température est consécutive à une quantité d'énergie introduite de manière extérieure, et à un niveau supérieur au flux de chaleur résultant des phénomènes d'échanges thermiques pour lesquels l'échangeur est conçu. La détection est donc d'une bonne sensibilité, et quasi-insensible aux phénomènes thermiques d'échange se produisant dans l'échangeur.

Un second avantage important réside dans le fait que la résistance électrique et le dispositif de mesure de température sont disposés en extrémité de l'échangeur. En effet, des études ont montré que l'encrassement d'un échangeur thermique était globalement uniforme sur l'ensemble des plaques du circuit, y compris les plaques de bordure. L'évaluation de l'encrassement global de l'échangeur par la mesure sur une plaque en extrémité d'empilement est donc représentative. L'avantage qui en résulte est que le dispositif d'évaluation d'encrassement peut se placer sur un échangeur neuf, ou qu'il peut être ajouté sur un échangeur existant, par insertion de la résistance caractéristique. Les performances de l'échangeur ne sont donc pas modifiées par la présence du dispositif d'évaluation de l'encrassement, qui n'influe en aucun cas sur les pertes de charges des circuits de fluides.

En pratique, la résistance électrique peut être interposée entre la plaque située en extrémité d'empilement et le bâti de l'échangeur, plus généralement tout élément formant le fond fixe ou mobile de l'empilement de plaques.

Il est également possible d'interposer la résistance électrique entre la dernière plaque de l'empilement et une plaque supplémentaire, qui présente la même géométrie que les autres plaques, mais qui n'intervient pas dans la formation des circuits de fluides. Ainsi, la résistance caractéristique vient au contact de la dernière plaque de l'empilement jouant un rôle dans la définition des circuits de fluides, et elle est recouverte par une plaque supplémentaire ou "postiche", qui est plaquée sur le reste de l'empilement des plaques.

Avantageusement en pratique, l'ensemble peut comporter une couche de matériau isolant, disposée du côté de la résistance électrique opposée à la plaque d'extrémité de l'empilement. En effet, dans ce cas, on cherche préférentiellement à minimiser les pertes thermiques vers l'extérieur de l'échangeur pour faire en sorte que le flux de chaleur généré par la résistance caractéristique se dirige en direction de la dernière plaque de l'échangeur participant aux échanges thermiques.

En pratique, l'évaluation de l'état d'encrassement de l'échangeur passe par une étape d'alimentation en énergie électrique de la résistance électrique, par périodes soit impulsionnelles, soit par échelons temporels, de manière à provoquer une élévation locale de température de la plaque plus ou moins encrassée. La mesure locale de la température permet de comparer l'évolution de la température au voisinage de la résistance caractéristique, avec des profils d'évolution prédéterminés. En fonction de l'écart par rapport à ces profils de référence, il est possible d'en déduire des modifications de chaleur spécifique de la plaque, dues à une épaisseur d'encrassement supplémentaire.

L'évaluation en temps réel de l'état d'encrassement de l'échangeur peut être utilisée de manière ponctuelle, pour vérifier l'état d'encrassement par une valeur absolue ou relative d'une épaisseur d'encrassement, ou bien encore une valeur différentielle montrant l'évolution dynamique de l'encrassement. Des statistiques et un suivi de l'évolution de ces valeurs peuvent également être générés.

Dans le cas particulier où l'échangeur est équipé d'un dispositif de nettoyage automatique, on peut prévoir que le dispositif d'évaluation de l'encrassement délivre une information qui est utilisée pour la commande de ces dispositifs de nettoyage, de manière à déclencher ces derniers lorsque les mesures de l'encrassement le requièrent, et de les arrêter lorsque les mesures indiquent un état correct de l'échangeur.

### Description sommaire des figures

La manière de réaliser l'invention, ainsi que les avantages qui en découlent ressortiront bien de la description des modes de réalisation qui suivent, à l'appui des figures annexées, dans lesquelles :
La figure 1 est une vue en perspective sommaire d'un échangeur thermique conforme à l'invention, montré dans une configuration avant serrage des différentes plaques entre-elles.
La figure 2 est une vue schématique partielle en coupe d'une première variante de montage de la résistance caractéristique entre une plaque et le bâti de l'échangeur.
La figure 3 est une vue en coupe sommaire partielle d'une variante de montage de la résistance, entre deux plaques de géométrie similaire.
La figure 4 est une vue de dessus d'un élément incluant la résistance caractéristique.
Les figures 5 et 6 sont des diagrammes illustrant l'évolution dans le temps, de la température mesurée à proximité de la résistance caractéristique, respectivement à pouvoir d'échange variable et à encrassement variable.

### Manière de réaliser l'invention

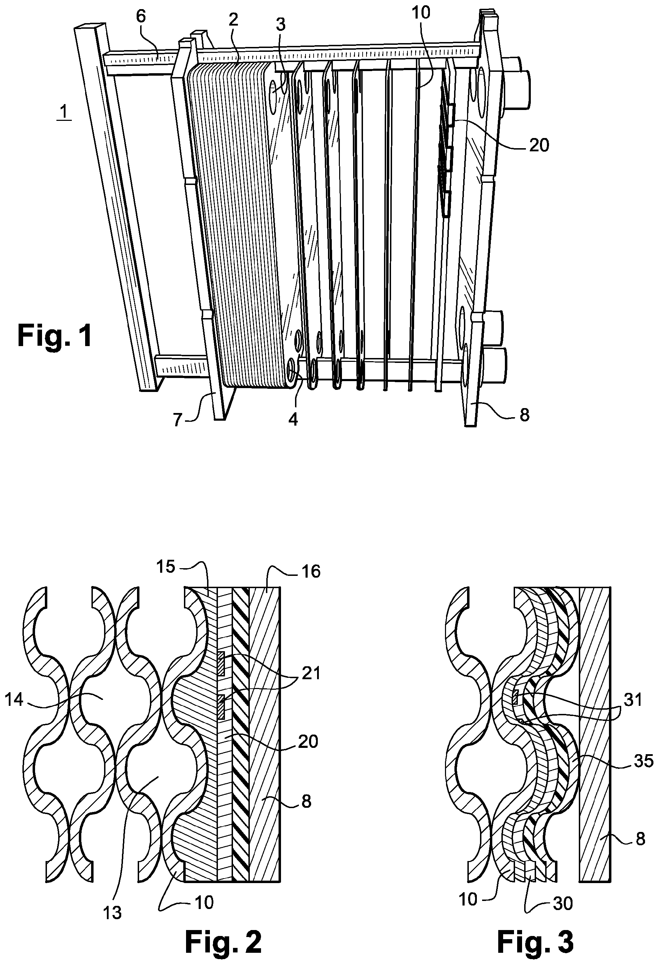

Comme déjà évoqué, l'invention concerne un échangeur thermique à plaques, équipé d'un dispositif permettant d'évaluer en temps réel son état d'encrassement. Un tel échangeur peut être constitué de différentes manières, par exemple à partir de plaques soudées ou brasées entre-elles et maintenues dans un bâti rigide, ou bien encore comme illustré à la figure 1, par un ensemble de plaques empilées et serrées dans un bâti.

Plus précisément, l'échangeur (1) illustré à la figure 1 comporte une pluralité de plaques (2) empilées les unes sur les autres pour définir des circuits de fluides par l'intermédiaire des ouvertures (3, 4) de passage des fluides. Ces plaques sont maintenues les unes par rapport aux autres au moyen d'un bâti (6) incluant deux éléments de fond (7, 8). L'élément de fond (7) est mobile et peut être rapproché de l'élément de fond (8) pour plaquer l'intégralité des plaques les unes sur les autres. Cet échangeur (1) est donc montré avant serrage, et il permet donc d'identifier la dernière plaque (10) de l'échangeur, définissant les circuits de fluides. L'échangeur comporte également la résistance caractéristique, montée sur l'élément (20), présent entre la dernière plaque (10) et l'élément de fond (8).

Plus précisément, et comme illustré à la figure 2, la résistance électrique (21) peut être montée sur un élément plan et flexible (20), de type circuit intégré, qui est interposé entre l'élément de fond (8) et la dernière plaque (10) participant à la définition des circuits de fluides (13, 14) avec interposition de couches (15, 16) de matériau isolant. Il importe que la couche (15), reliant thermiquement la résistance (21) à la dernière plaque (20) de l'empilement, présente des propriétés thermiques de conduction sensiblement similaires à celles de la plaque (20), dont elle doit permettre d'évaluer le comportement thermique. En pratique, cette couche de matériau isolant (15) peut typiquement être du Kapton^{®}.

La couche isolante (16), interposée entre l'élément (20) supportant la résistance (21) et l'élément de fond (8) de l'échangeur, doit être fortement isolante thermiquement, de manière à ce que le flux de chaleur généré par la résistance (21) se dirige en direction de la plaque (20), et non pas vers l'extérieur de l'échangeur. En pratique, ce matériau est choisi en fonction des performances de l'échangeur et des autres matériaux constituant à la fois les plaques (2, 10) et le support (20) de la résistance. La force de serrage de l'ensemble des plaques empilées avec les deux éléments de fond permet d'assurer une bonne conduction thermique entre la résistance électrique (21) et la plaque (10), dont la couche d'encrassement sera mesurée.

Un système de montage alternatif est illustré à la figure 3, dans laquelle l'élément (30) supportant la résistance électrique (31) est interposé entre deux plaques de géométrie similaire. La plaque (10) constituant la dernière plaque de l'empilement définissant les circuits de fluides, est thermiquement reliée à la résistance (31) par l'intermédiaire d'une couche (35) similaire à la couche (15) de la figure 2. Une plaque supplémentaire (32), qui peut typiquement être une plaque identique aux autres plaques de l'échangeur, mais qui ne participe pas à la définition des circuits de fluides, vient prendre en sandwich l'élément (30) portant la résistance (31), par l'intermédiaire également d'une couche isolante (36). Cette couche isolante (36) est déterminée pour orienter le flux de chaleur issu de la résistance en direction de l'échangeur, et non pas vers l'extérieur de ce dernier.

En pratique, la résistance caractéristique peut être disposée à différents endroits de l'échangeur. Comme vu à la figure 1, la résistance peut être placée entre la dernière plaque et le bâti (8), mais elle peut aussi être placée à l'autre extrémité entre la première plaque et le bâti (7).

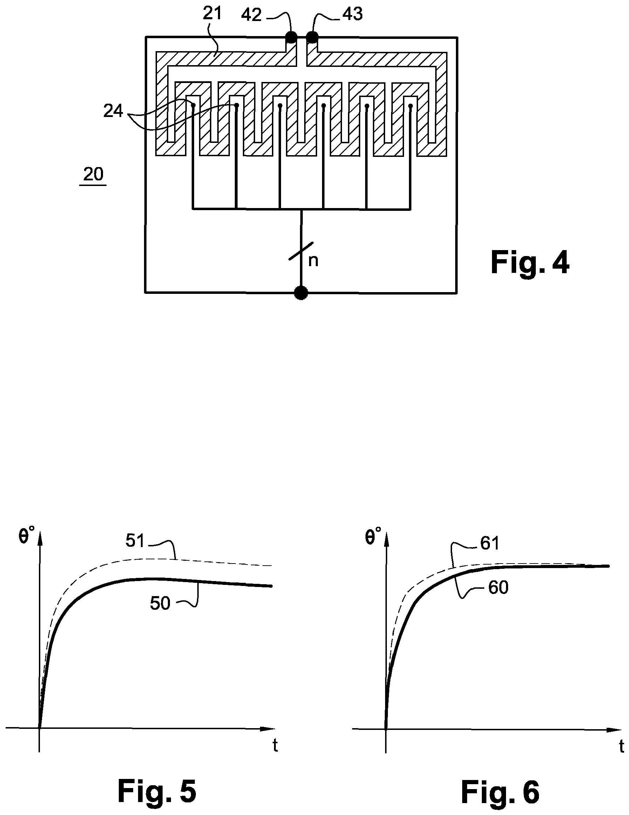

En pratique, la résistance électrique peut être réalisée comme illustré à la figure 4, par une piste métallique déposée sur un support relativement flexible. Cette résistance (21) est associée à un ou plusieurs thermocouples (24), permettant de mesurer la température à proximité directe de la résistance (21). Deux bornes d'alimentation (42, 43) peuvent être prévues, avec toute la connectique nécessaire pour pouvoir alimenter cette résistance depuis l'extérieur de l'échangeur La résistance peut aussi être réalisée de manière monobloc (20 et 21 constituent alors un seul objet). Dans ce cas, la résistance s'étend sur toute la hauteur mais la mesure reste localisée au niveau des thermo couples.

En fonctionnement, la sonde (20) constituée par la résistance (21) et les thermocouples (24) génère un flux de chaleur, lors de l'alimentation électrique de la résistance (21). L'alimentation de la résistance peut s'effectuer par des impulsions ou préférentiellement par un échelon de courant. Dans ce cas, la résistance s'échauffe et créé un déséquilibre thermique de l'ensemble formé par les plaques de l'échangeur (10), la couche isolante (15), ainsi que la résistance (21) et son support (20). Les thermocouples (24) placés près de la résistance électrique (21) permettent d'enregistrer l'évolution de la température. En pratique, on a constaté que plus le pouvoir d'échange du système est élevé, plus la réponse à l'excitation est amortie

Ainsi, comme illustré à la figure 5, la température atteinte lorsque le système présente un pouvoir d'échange élevé, illustrée en traits pleins (50), est inférieure à la température atteinte lorsque le pouvoir d'échange est inférieur, comme illustré en traits pointillés (51). Dans la mesure où le flux de chaleur généré par la résistance (21) est quasi exclusivement orienté vers l'intérieur de l'échangeur, la dynamique d'évolution de la température au sein du système ne dépend que du pouvoir d'échange au niveau de la plaque (10) de l'échangeur, et de l'inertie de la plaque (10), ce pouvoir d'échange et cette inertie étant eux-mêmes fonction de l'encrassement.

Les calculs de comportement thermique de tels systèmes peuvent être modélisés directement par la méthode des dipôles thermiques (Maillet, D., Degiovanni, Méthode analytique de conduction inverse appliquée à la mesure du coefficient de transfert local sur un cylindre en convection forcée, Revue de physique appliquée, Volume 24, pages 741-759, 1989*).* Ainsi, par une analyse de sensibilité aux paramètres, on démontre que d'une part le système est sensible, et que d'autre part, il y a décorrélation des effets de modification de chaleur spécifique, dues à l'épaisseur d'encrassement supplémentaire au matériau de la plaque (10), identifiables sur des temps courts, et du coefficient d'échange, identifiable sur des temps plus long. Ainsi, en effectuant périodiquement ce type de mesures par impulsions ou échelons il est possible d'obtenir un réseau de courbes qui évoluent en fonction du temps, et comme illustré à la figure 6.

Ainsi, à conditions égales de fonctionnement de l'échangeur,, on constate que l'évolution en température, dans des conditions d'encrassement faibles, tel qu'illustré en traits pleins (60), est différente de l'évolution en condition encrassée, illustré en traits pointillés (61). L'analyse des évolutions permet donc, par un étalonnage préalable, d'établir la relation entre les mesures de températures et l'épaisseur d'encrassement moyenne sur la plaque.

Il ressort de ce qui précède que les échangeurs thermiques équipés du dispositif d'évaluation de leur encrassement conforme à l'invention, présentent de multiples avantages. En effet, ils présentent :
- une sensibilité suffisante pour pouvoir délivrer une information représentative, même dans le cas d'échangeurs de chaleur dans lesquels les flux sont relativement réduits,
- une capacité à être intégrés dans de nouveaux échangeurs, ou bien encore d'être ajoutés sur des échangeurs existants,
- un coût relativement réduit, car il repose sur l'utilisation d'une résistance électrique planaire et d'un nombre limité de thermocouples,

## Revendications

1. Echangeur thermique à plaques (1) comportant une pluralité de plaques empilées (2) et un bâti (8), et
incluant un dispositif (20) d'évaluation de l'état d'encrassement du ou des circuits de fluides, **caractérisé en ce que** le dispositif d'évaluation (20) comporte une résistance électrique (21) thermiquement reliée à la plaque (10) située en extrémité de l'empilement, et des moyens (24) de mesure de la température au voisinage directe de ladite résistance, ladite résistance électrique (21,31) étant interposée entre la plaque (10) située en extrémité d'empilement, et le bâti (8) de l'échangeur.

2. Echangeur selon la revendication 1, **caractérisé en ce que** la résistance électrique (31) est interposée entre la plaque (10) située en extrémité d'empilement, et une plaque supplémentaire (32).

3. Echangeur selon la revendication 1, **caractérisé en ce qu'**il comporte une couche d'un matériau isolant (16, 36) disposée entre la résistance électrique (21, 3) et le bâti de l'échangeur.

4. Echangeur selon la revendication 1, **caractérisé en ce que** la résistance est réalisée par une piste métallique déposée sur un support flexible.

5. Procédé d'évaluation de l'état d'encrassement d'un échangeur à plaques selon l'une des revendications 1 à 4, **caractérisé en ce qu'**il consiste à alimenter électriquement la résistance électrique (21), puis à comparer l'évolution de la température au voisinage de ladite résistance avec des profils d'évolution prédéterminés.

6. Procédé selon la revendication 5, **caractérisé en ce que** la résistance électrique est alimentée par périodes impulsionnelles.

7. Procédé selon la revendication 5, **caractérisé en ce que** la résistance électrique est alimentée par échelons de temps.

8. Procédé selon la revendication 5, **caractérisé en ce que** le dispositif d'évaluation de l'encrassement délivre une information utilisée pour la commande d'un dispositif de nettoyage de l'échangeur.

## Patentansprüche

1. Ein Plattenwärmeaustauscher (1), der eine Vielzahl von gestapelten Platten (2) und ein Gehäuse (8) enthält, und
der eine Vorrichtung (20) zur Beurteilung des Kalkablagerungsausmasses des oder der Fluidkreislaufs(läufe) enthält, **dadurch gekennzeichnet, dass** die Beurteilungsvorrichtung (20) einen elektrischen Widerstand (21) umfasst, der thermisch verbunden ist, mit der Platte (10), die sich am Ende des Stapels befindet, sowie Mittel (24), um die Temperatur in der unmittelbaren Umgebung dieses Widerstandes zu messen, wobei sich dieser elektrische Widerstand (21, 31) zwischen der Platte (10) am Ende des Stapels und dem Gehäuse (8) des Wärmeaustauschers befindet.

2. Wärmeaustauscher gemäß Anspruch 1, **dadurch gekennzeichnet, dass** der elektrische Widerstand (31) zwischen der Platte (10) am Ende des Stapels und einer zusätzlichen Platte (32) angeordnet ist.

3. Wärmeaustauscher gemäß Anspruch 1, **dadurch gekennzeichnet, dass** er eine Schicht Dämmmaterial (16, 36) enthält, die zwischen dem elektrischen Widerstand (21, 31) und dem Gehäuse des Wärmetauschers angeordnet ist.

4. Wärmeaustauscher gemäß Anspruch 1, **dadurch gekennzeichnet, dass** der Widerstand aus einem Metallstreifen besteht, der auf einem flexiblen Untergrund aufgebracht ist.

5. Verfahren zur Beurteilung des Kalkablagerungsausmasses eines Platten - Wärmeaustauschers gemäß einem der Ansprüche 1 bis 4, **dadurch gekennzeichnet, dass** es darin besteht, den elektrischen Widerstand (21) mit Strom zu versorgen und dann die Entwicklung der Temperatur in der Umgebung dieses Widerstandes mit vorher festgelegten Entwicklungsprofilen zu vergleichen.

6. Verfahren gemäß Anspruch 5, **dadurch gekennzeichnet, dass** der elektrische Widerstand durch Impulsperioden gespeist wird.

7. Verfahren gemäß Anspruch 5, **dadurch gekennzeichnet, dass** der elektrische Widerstand durch Zeitstufen gespeist wird.

8. Verfahren gemäß Anspruch 5, **dadurch gekennzeichnet, dass** die Vorrichtung zur Beurteilung der Kalkablagerung eine Information liefert, die zur Steuerung einer Reinigungsvorrichtung des Wärmeaustauschers verwendet wird

## Claims

1. A plate-type heat exchanger (1) comprising a plurality of stacked plates (2) and a frame (8), and including a device (20) for evaluating the extent to which the fluid circuit(s) have become coated in scale, **characterised in that** the evaluation device (20) comprises an electrical resistor (21) which is thermally connected to plate (10) located at the end of the stack and means (24) of measuring the temperature in the immediate vicinity of said resistor, said electrical resistor (21, 31) being placed between plate (20) located at the end of the stack and the frame (8) of the heat exchanger.

2. A heat exchanger as claimed in claim 1, **characterised in that** electrical resistor (31) is placed between plate (10) located at the end of the stack and an additional plate (32).

3. A heat exchanger as claimed in claim 1, **characterised in that** it comprises a layer of an insulating material (16, 36) located between electrical resistor (21,3) and the frame of the heat exchanger.

4. A heat exchanger as claimed in claim 1, **characterised in that** the resistor is a metallic track deposited on a flexible substrate.

5. A method for evaluating the extent to which a plate-type heat exchanger has become coated in scale as claimed in any claims 1 to 4, **characterised in that** it involves supplying electric power to electrical resistor (21), then comparing changes in the temperature in the vicinity of said resistor to predetermined change profiles.

6. A method as claimed in claim 5, **characterised in that** power is supplied to the electrical resistor by periodic pulses.

7. A method as claimed in claim 5, **characterised in that** power is supplied to the electrical resistor in timed steps.

8. A method as claimed in claim 5, **characterised in that** the device for evaluating the extent of coating in scale outputs a signal which is used to control a device for cleaning the heat exchanger.
